# EUROPEAN PATENT SPECIFICATION

(11) **EP 2 958 711 B1**
(45) Date of publication and mention of the grant of the patent: **07.06.2017**
(21) Application number: 13704975.5
(22) Date of filing: 21.02.2013
(51) Int. Cl.: B25J 9/16, B25J 13/06, B25J 19/06

(54) **AN INDUSTRIAL ROBOT SYSTEM COMPRISING AN ENABLING UNIT AND A PLURALITY OF GENERAL PURPOSE DEVICES AND A METHOD FOR CONTROLLING THE ROBOT SYSTEM**
INDUSTRIEROBOTERSYSTEM MIT EINER AKTIVIERUNGSEINHEIT UND MEHREREN ALLZWECKVORRICHTUNGEN SOWIE VERFAHREN ZUR STEUERUNG DES ROBOTERSYSTEMS
SYSTÈME DE ROBOT INDUSTRIEL COMPRENANT UNE UNITÉ D'ACTIVATION ET UNE PLURALITÉ DE DISPOSITIFS D'USAGE GÉNÉRAL, ET PROCÉDÉ DE COMMANDE DUDIT SYSTÈME DE ROBOT

(43) Date of publication of application: 30.12.2015
(73) Proprietor: ABB Schweiz AG, 5400 Baden (CH)
(72) Inventor: MURPHY, Steve, S-436 52 Hovås (SE); SJÖBERG, Ralph, S-723 55 Västerås (SE)
(74) Representative: Savela, Reino Aleksi
(86) International application number: PCT/EP2013/053432
(87) International publication number: WO 2014/127822

(56) References cited:
- WO-A1-01/71878
- WO-A1-2012/022381
- DE-A1-102010 025 781
- US-A1- 2005 141 681

## Description

### Field of the invention

The present invention relates to an industrial robot system comprising a manipulator movable about a plurality of axes, a robot controller, and an enabling unit connected to the robot controller, including an enabling switch that has to be activated to enable jogging of the robot. The present invention also relates to a method for controlling the industrial robot system.

### Prior Art

An industrial robot includes a robot controller and a manipulator, and is programmed to carry out work along a predetermined operating path. In order to program or teach the robot the work, the manipulator is manually moved to positions along a desired operating path. These positions are stored as instructions in a memory in the robot controller. A robot program is generated, using the specified positions. During operation of the robot, the robot program is executed, thereby making the manipulator operate as desired.

Existing practice for on-line or teach-in programming of a robot involves teaching the robot operating path by manually moving the manipulator along the path by means of a portable user operated client device, generally denoted a Teach Pendant Unit (TPU). To manually move the manipulator is often called to jog the manipulator. The person teaching the robot is denoted an operator or a user. Almost all robot controllers on the market today include a teach pendant unit, which is typically defined as a device for jogging and programming a robot. The teach pendant unit includes operator control means, for example, a joystick, a ball, or a set of buttons, which the operator uses to instruct the robot movement. The teach pendant unit further comprises a visual display unit, an emergency stop button, and an enabling device and might also include a mode-switch device. The enabling device is, for example, a dead man switch or a push button, which has to be pressed by the operator to enable manual control of the robot by the teach pendant unit. The TPU generates information on user instructed movements for the manipulator and sends the jog information and information on the state of the enabling device to the robot controller. The robot controller controls the movements of the manipulator based on jog information received from the teach pendant unit and in dependence on the state of the enabling device.

The teach pendant unit may also be used for monitoring the robot program, changing certain variables in the program, starting, stopping and editing the program or switching between different controller modes, such as Manual or Automatic.

An industrial robot can be operated in manual mode and automatic mode. The robot controller is provided with a switch for switching between manual mode and automatic mode. When the robot is in automatic mode, the movements of the robot are controlled in accordance with a control program running on a robot controller. When the robot is in manual mode, the movements of the robot are controlled by the teach pendant unit. When the robot is switched to automatic mode, then jogging of the robot from the teach pendant is often restricted.

WO2007/054435 discloses a robot system including a manipulator, a robot controller for controlling the manipulator and a plurality of teach pendant units, which are adapted to be simultaneously connected to a safety system of the robot controller. One of the teach pendant units is a Master TPU, and the robot controller is adapted to receive information from all teach pendant units, which are simultaneously connected to the safety system, about whether the enabling device of the teach pendant unit is activated or deactivated, to permit manual movement of the robot by the Master TPU, if the received information indicates that the enabling devices for all teach pendant units connected to the safety system are simultaneously activated, to not permit manual movement of the Master TPU if the information received indicates that at least one of the enabling devices is deactivated, and to not permit manual movement of the robot by any other TPU than the Master TPU. This makes it possible for two or more teach pendant units to be simultaneously connected to the safety system of the robot controller. This means that a plurality of operators in a robot cell can be provided with a teach pendant unit connected to the safety system.

As such, teach pendant units are complex, expensive, and proprietary devices. They are delivered with each robot controller and are a continual source of cost and maintenance for an end-user operator. In certain circumstances, having a teach pendant is an undesirable feature of a robot controller. This is exemplified when a robot is to be integrated as part of a more complex machine. These machines will have their own user interfaces and operator panels for setup, commissioning, and programming where the robot is only a small part of the whole. The presence of the robot teach pendant presents a problem as it is necessary to operate the robot in manual mode, but unnecessary when operating from the normal machine panel. Robot controllers are not designed to allow manual operations without a connected teach pendant.

Many machine builders choose then to hide the robot teach pendant and bring it out only when the robot has an issue that can only be solved on the teach pendant.

It is well known in the industry to connect panels and PC's to a robot controller. Panels are added for Operator Interfaces while PC's are often added to provide additional sensor interfaces or run-time command-and-control operations of the robot controller. In these cases there is still always a teach pendant unit connected to the robot controller. Recently, newer devices, such as commercial-off-the-shelf phones and tablets have appeared on the market. Robot manufacturers and end-users have started experimenting with possible ways to allow these devices to connect to the robot controller as well.

US2010/0092032 discloses a user operable robot control terminal that may be used by a user to control operation of a robot. The robot control terminal may take a variety of forms including desktop, or personal computer, laptop computers, workstations, main frame computers, handheld computing units, such as personal digital assistance, web-enabled devices, cellular phones, etc.

DE 10 2010 025781 A1 also discloses using a general purpose device to jog a robot, by coupling the general purpose device to an enabling unit and following an authorisation procedure.

### Object and summary of the invention

One object of the present invention is to reduce costs and maintenance for an industrial robot system. Another object is to provide a robot system without the need of a teach pendant unit for teaching and programming the robot.
According to a first aspect of the invention, the object of the invention is achieved by an industrial robot system as defined in claim 1.
The industrial robot system comprises a manipulator movable about a plurality of axes, a robot controller configured to control the movements of the manipulator based on a robot control program during automatic mode and based on jog commands during manual mode, an enabling unit connected to the robot controller and including an enabling device that has to be activated to enable jogging of the robot, and the enabling unit is configured to transfer information regarding the state of the enabling device to the robot controller. The robot controller is configured to receive information regarding the state of the enabling device from the enabling unit. The system further comprises at least two general purpose devices adapted to communicate with the robot controller, each of the general purpose devices including a user interface adapted to allow jogging of the manipulator, an authorization handler configured to send a request to the robot controller for authorization to take over control the robot during manual mode, and a jog command module configured to send jog commands to the robot controller in response to user interactions with the user interface. The enabling unit and the general purpose devices are separate devices each comprised in a respective individual housing. The robot controller is configured to receive the requests for authorization from the general purpose devices, to grant or deny the requests for authorization, to receive the jog commands from the general purpose devices, and to control the movements of the manipulator during manual mode based on the received jog commands in dependence on the state of the enabling device and provided that the general purpose device sending the jog commands has been authorized control of the robot during manual mode.

A teach pendant unit is a special purpose device and can only be used in connection with control of an industrial robot. A general purpose device is a device that can be used in a large number of applications and is not designed for a special purpose. The general purpose devices must have the ability to receive inputs from a user, for example, inputs from a key board, physical buttons, a touch screen, a pointing device, voices, eye movement, or gestures, and to evaluate the inputs. Further, the general purpose devices must possess the possibility to add functionality, for example, to download software modules, such as apps. The functionality that has to be added to the general purpose devices is the ability to request authorization to take over control the robot during manual mode and to jog the manipulator.

According to the invention, the client devices are provided with software that adapts the user interfaces to allow jogging of the manipulator, for example, to enable a user to input jog instructions to the device. To be able to jog the manipulator, the general purpose devices are provided with software modules that adapt the existing user interfaces of the devices to allow jogging of the manipulator and sends jog commands to the robot controller in response to user interactions with the user interface. The software modules are running on the general purpose devices. Thereby, the existing user interfaces on the client devices can be used for jogging the manipulator. The software modules can easily be downloaded by the general purpose devices, for example, from the Internet, from the robot controller itself, or other sources. The present invention makes it possible to use a general purpose device to jog the manipulator, such as a smart phone, a tablet, a personal digital assistant (PDA), a lap top computer, personal computer, a panel computer, interactive glasses, a gesture recognition unit, or the like, equipped with appropriate software for jogging the manipulator. By using a general purpose device, it is possible to reduce the costs of the robot system in that available and readily accessible hardware is utilized. The robot is jogged via the existing user interfaces of the general purpose devices, such as touch screens and buttons on the device. Thus, it is possible to provide jogging of the robot from any general purpose device having a user interface.

The present invention, shows how a robot controller and associated general purpose devices, such as phones, PC's, panels, and tablets, can be built in order to provide a complete robot system that does not need a teach pendant. The robot controller is provided with software for coordinating the general purpose devices and the enabling unit to work together, and together fulfill the same functions as in a teach pendant unit. Thus, the robot system does no longer need a teach pendant unit. This saves money for the end-user and the manufacturer as well as providing an easier-to-use system.

In opposite to the teach pendant unit, the general purpose devices are not provided with an enabling device. To fulfil safety demands, jogging of the robot should only be allowed when an operator activates the enabling device. According to the invention, a separate enabling unit is used together with the general purpose device to jog the manipulator. The enabling unit comprises an enabling device, but lacks the ability to jog the manipulator. The enabling device is, for example, a dead-man switch. The enabling unit is located close to the robot controller and is physically or wirelessly connected to the robot controller. The enabling unit transfers information regarding the state of the enabling device to the robot controller. In order to allow an operator to jog the manipulator by means of the general purpose device, the enabling device on the enabling unit must be activated, typically by pushing and holding down the enabling device. The robot controller receives information regarding the state of an enabling device from the enabling unit, and is configured to enable jogging of the manipulator in dependence on the state of the enabling device on the enabling unit. By providing a separate enabling unit it is made possible to use a general purpose device for jogging the manipulator.

The enabling unit does not need to have the ability of jogging the manipulator, and the general purpose devices do not need any enabling device. This means that the enabling unit does not need a display unit or a joystick or any other devices for instructing robot movements. The enabling unit may only comprise one or more switches and possibly some push buttons. Consequently, the enabling unit can be a fairly non-complex and inexpensive device. It is also possible to design the enabling unit to be small and light-weight such that the operator easily can hold and manoeuvre the enabling unit.

The present invention makes it possible to have multiple general purpose devices with the ability to control the robot when the robot controller is in manual mode. The general purpose devices are able to load and run appropriate software to request authorization to take over control the robot during manual mode and for jogging the manipulator, and the robot controller is provided with software to handle the requests, i.e. to allow or deny the requests. This means, for example, that each operator can use his own cell phone to jog the manipulator.

The present invention also makes it possible to allow remote jogging of the robot by an operator at a remote site. The operator located at the remote site must cooperate with another operator at local site including the manipulator. The remote operator has a general purpose device provided with appropriate software for jogging the manipulator and to request authorization to take over control the robot, and the local operator has an enabling unit connected to the robot controller. The remote operator generates jog commands via the user interface of the general purpose device, and the local operator enables or disables jogging by activating or deactivating the enabling device on the enabling unit.

According to an embodiment of the invention, the general purpose devices are handheld, such as smart phones, table computers, and personal digital assistants. To facilitate the jogging, it is advantageous to use a handheld general purpose device so that the device can be easily held by the operator while jogging the manipulator. For example, the operator may operate the enabling unit with one hand and the general purpose device with the other hand.

According to an embodiment of the invention, the user interface of each of the general purpose devices is adapted to allow a user to modify the robot control program, and the robot controller is configured to authorize the general purpose devices to jog the manipulator as well as to modify the robot control program via the adapted user interfaces of the general purpose devices. The client devices load and run software that adapts the user interfaces to allow a user to modify the robot control program and to inform the robot controller of the modifications. This embodiment makes it possible to provide for jogging and modification of the robot control program via the user interfaces of the general purpose devices.

According to an embodiment of the invention, the user interface of each of the general purpose devices is adapted to allow a user to modify input and output signals to the robot controller and configuration parameters of the robot controller, and the robot controller is configured to authorize the general purpose devices to modify the robot input and output signals, and configuration parameters via the user interfaces of the general purpose devices. The client devices load and run software that adapts their user interfaces to allow a user to modify input and output signals to the robot controller, and to inform the robot controller of the modifications. This embodiment also makes it possible to provide for modification of the I/O system of the robot controller and configuration parameters of the robot controller. The robot controller is responsible for handling multiple inputs and outputs to the robot controller, such as tool control signals, feeding device signals, and conveyor signals.

According to an embodiment of the invention, the robot controller is configured to check that no other general purpose device has been granted control over the robot upon receiving the request, and to deny the request if another general purpose device has already been granted control over the robot. The robot controller allows each general purpose device to negotiate the rights to jog the manipulator and to perform the functions that were previously associated with the permanently attached teach pendant unit.

According to an embodiment of the invention, the robot controller is configured to send a reply to the general purpose device requesting authorization to inform whether the request was granted or denied, and the general purpose device is configured to inform a user of the general purpose device whether control of the robot was granted or denied upon receiving the reply.

According to an embodiment of the invention, the authorization handler is configured to send credentials of the user to the robot controller and the robot controller comprises a user authorization module configured to check credentials received from the general purpose devices, and the robot controller is configured to deny the request if the check of the credentials was not successful. With credentials is meant any type of information which can be used as evidence of entitlement to log in to the controllers. Possible credentials can include but are not limited to: password and username, a smart card, biometric identification, tokens, or digitally signed files. Many other types of credentials are possible. The operator inputs credentials to the authorization handler, which sends the credentials to the robot controller that checks the credentials in order to confirm that the person sending the request to the controller is authorized. The robot controller denies the request if the check of the credentials was not successful, i.e. the credentials were not correct, or the operator is not authorized to control the robot. This embodiment increases the safety of the system.

According to an embodiment of the invention, the system comprises a confirmation member located in the vicinity of the manipulator and separated from the general purpose devices The robot controller is configured to receive an ok-signal when the confirmation member is activated, and the robot controller is configured to deny the request for authorization if the ok-signal is not received within a certain time limit from the point in time the request for authorization was received. In a remote system, it is not enough to have authorized credentials to allow remote jogging of the robot. An operator on the local site must also give his approval to allow the remote device control over the robot during manual mode. The approval is given by providing proof of local access to the robot controller. The providing of proof of local access is a confirmation of physical presences of an operator to the robot controller. The operator giving the approval must be physically on the local site in order to be able to give his approval. In this embodiment of the invention, a confirmation member is used to confirm local presence of an operator. The robot controller is configured to deny the request for authorization to control the robot during manual mode if the ok-signal is not received within a certain time limit from the point in time the request for authorization was received. Accordingly, a more safe and secure access to manual control of robot is achieved. A further advantage achieved is that the operator on the local site may control when the operator on the remote site is allowed manual control of the robot depending on the situation on the local site.

According to an embodiment of the invention, the confirmation member is provided on the enabling unit, and the enabling unit is configured to send an ok-signal to the robot controller upon activation of the confirmation member. By providing the confirmation member on the enabling unit, operation of the switch is facilitated for the operator on the local site, since the local operator also needs to access the enabling device on the enabling unit.

According to an embodiment of the invention, the robot controller comprises a timer and the robot controller is configured to:
- start the timer upon receiving a request for authorization to take over control of the robot from any of the general purpose devices,
- wait to receive information on whether a check of credentials sent from the general purpose device was successful or not,
- stop the timer and deny the request if the check of the credentials was not successful,
- wait to receive an ok-signal from the confirmation member,
- if an ok-signal is received within a certain time limit counted from the start of the timer, the request is granted, otherwise the timer is stopped and the request is denied, and
- send a reply to the general purpose device to inform whether the request was granted or denied. This embodiment achieves a safe and secure access to manual control of the robot.

According to an embodiment of the invention, the robot controller is configured to receive information about the state of the enabling device, and to cease the granted authorization upon receiving information that the enabling device is deactivated. By deactivating the enabling device, a local operator can easily cease a granted authorization of a remote operator to control the robot during manual mode. This embodiment makes it possible for a local operator to quickly disconnect any remote client that has been authorized control the robot in response to local conditions, and to restart the process of authorizing another general purpose device.

According to an embodiment of the invention, the enabling unit is connected to the robot controller via a wire, and the general purpose devices are in wireless communication with the robot controller. By connecting the enabling unit with a wire to the robot controller it certain to which controller the enabling unit is connected. Thus, there is no need to initiate a tedious and complex procedure for ensuring that a given enabling unit is actually associated with the correct robot controller. Only one wire is needed since the general purpose devices are in wireless communication with the robot controller.

According to an embodiment of the invention, the system comprises at least two manipulators and one or more robot controllers controlling the movements of the manipulators, and each manipulator is provided with an enabling unit connected to the robot controller controlling the movements of the manipulator. The same general purpose devices can be used to jog different manipulators by cooperating with different enabling units. Each of the enabling units is connected to a robot controller controlling the movements of the manipulator to be jogged.

According to an embodiment of the invention, the enabling unit is designed to be removably attached to one of the general purpose devices for enabling handling of the two devices as a single unit. Alternatively, the system comprises fastening means arranged to removably attach the enabling unit to one of the general purpose devices for enabling handling of the two devices as a single unit. The enabling unit and the general purpose device, which are arranged in two individual and separate housings, can be attached together by suitable mechanical fastening means to enable the handling of the two devices as a single unit yet enabling fast detaching when need arises. For example, the enabling is designed as a holder or docketing unit for one of the general purpose devices. For example, the fastening means may comprise a rack arranged to receive the enabling unit and one of the general purpose devices. Alternatively, the enabling unit may comprise a docking station arranged to physically receive the general purpose device. This facilitates handling of the enabling unit and the general purpose device by one operator. This embodiment is advantageous when the robot is manually controlled at a local site.

According to a second aspect of the present invention, the object of the invention is achieved by a method for controlling an industrial robot system according to claim 13.

The method comprises:
- receiving a request for authorization to take over control the robot during manual mode from one of the general purpose devices,
- checking that no other general purpose device has been granted control over the robot, and based thereon grant or deny the request for authorization,
- informing a user of the general purpose device requesting authorization whether control of the robot was granted or not,
- receiving information regarding the state of the enabling device from the enabling unit,
- receiving jog commands from one of the general purpose devices, and
- allowing movements the manipulator based on the received jog commands in dependence on the state of the enabling device and provided that the general purpose device sending the jog commands is authorized control the robot.

According to an embodiment of the invention, the authorization to control the robot comprises authorization for jogging the manipulator as well as for modifying the robot control program via the user interface of the general purpose device.

According to an embodiment of the invention, the method comprises;
- receiving user credentials from the general purpose device that sent the request,
- checking the credentials received from the general purpose device, and
- denying the request for authorization if the check of the credentials was not successful.

According to an embodiment of the invention, a confirmation member is located in the vicinity of the manipulator and separated from the general purpose devices, and the method comprises:
- receiving an ok-signal when the confirmation member is activated, and
- denying the request for authorization if the ok-signal is not received within a certain time limit from the point in time the request for authorization was received.

According to an embodiment of the invention, the method comprises:
- starting a timer upon receiving a request for authorization to take over control of the robot,
- stopping the timer and denying the request if another general purpose device has already been granted control over the robot, otherwise
- receiving user credentials from the general purpose device that sent the request,
- performing a check of the credentials in order to determine whether the user is allowed to control the robot,
- stopping the timer and denying the request if the check of the credentials was not successful, otherwise
- waiting to receive the ok-signal, and
- if the ok-signal is received within a certain time limit counted from the start of the timer, the request for authorization is granted, otherwise the timer is stopped and the request is denied, and
- sending a reply to inform the general purpose device whether the request was granted or denied.

### Brief description of the drawings

The invention will now be explained more closely by the description of different embodiments of the invention and with reference to the appended figures.
Fig. 1 shows a first example of an industrial robot system according to the invention.
Fig. 2 shows a first example of an enabling unit.
Fig. 3 shows a second example of an enabling unit designed as a holder for a client device.
Fig. 4 shows block diagrams of an industrial robot system according to an embodiment of the invention.
Fig. 5 shows a second example of an industrial robot system according to the invention.
Fig. 6 shows a third example of an industrial robot system according to the invention.

### Detailed description of preferred embodiments of the invention

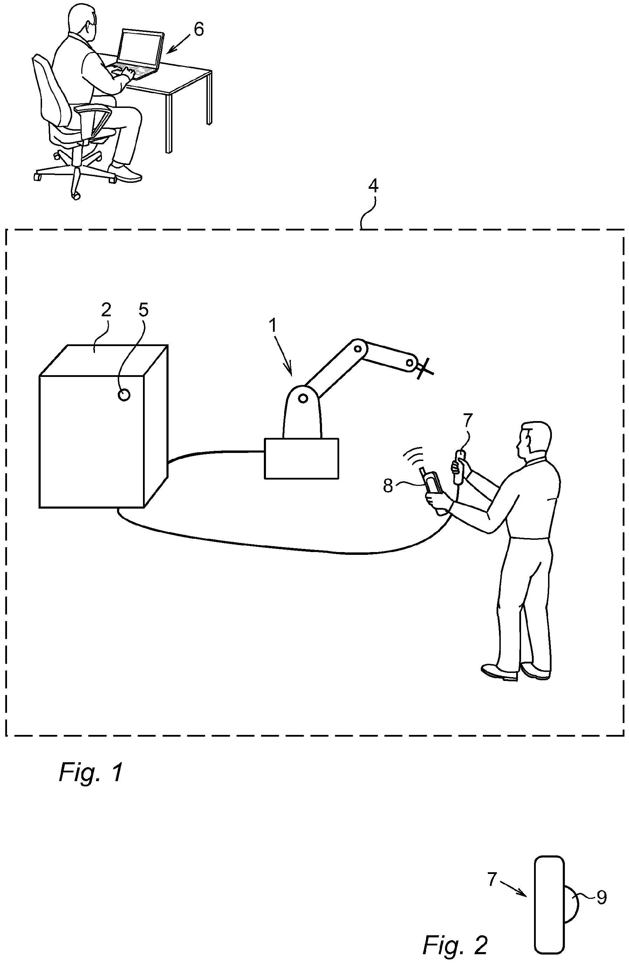

Figure 1 shows a first example of an industrial robot system according to the invention. The industrial robot system comprises an industrial robot including a manipulator 1 movable about a plurality of axes and a robot controller 2 configured to control the movements of the manipulator. The number of axes of the manipulator may be two or more. The robot is located within a robot cell 4 surrounded by a safety arrangement, for example, a fence. The robot controller 2 is provided with a switch 5 for switching between manual mode and automatic mode. When the robot is in automatic mode, the movements of the robot are controlled in accordance with a control program running on the robot controller. When the robot is in manual mode, the movements of the robot are manually controlled by a human operator. When the robot is switched to automatic mode, it may no longer be possible to manually control the robot.

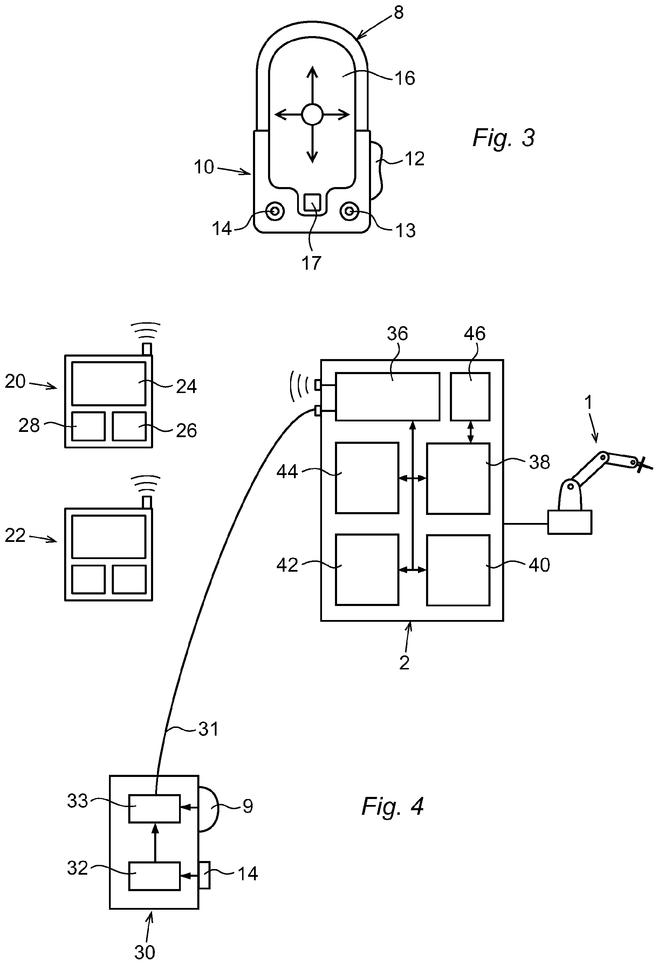

The industrial robot system further comprises an enabling unit 7 connected to the robot controller. Figure 2 shows the enabling unit 7 in more details. Figure 3 shows another example of an enabling unit 10, which will be described later. In this embodiment, the enabling unit 7 is connected to the robot controller 2 via a wire. Alternatively, the enabling unit 7 can be wirelessly connected to the robot controller. Preferably, the enabling unit is portable and handheld. The enabling unit 7 is provided with an enabling device 9 that has to be activated to enable jogging of the robot. The enabling device is, for example, a dead man switch or a push button, which has to be pressed and hold by the operator to enable manual control of the robot. The enabling unit 7 is configured to transfer information regarding the state of the enabling device to the robot controller 2. The robot controller 2 is configured to receive information regarding the state of the enabling device 9, i.e. whether the enabling device is activated or not, from the enabling unit 7 and to control the movements of the manipulator 1 during manual mode in dependence on the state of the enabling device.

The enabling unit 7 can be connected to a safety system of the robot controller. When the enabling unit 7 is connected to the safety system of the robot controller, the enabling function of the robot is activated, which means that the enabling device 9 of the enabling unit is put into function. Jogging of the manipulator is enabled when the enabling device is activated and the controller is in manual mode, and jogging of the manipulator is disabled when the enabling device is not activated or the controller is in automatic mode. When the enabling function is activated, the robot controller may allow jogging of the robot provided that the enabling device 9 is pressed. The enabling unit 7 may also be provided with an emergency stop button. However, the enabling unit 7 does not have any display unit or any user interface to allow jogging of the manipulator, for example, the enabling unit does not have a joy stick or jog buttons.

The system further comprises at least two user operable client devices in the form of general purpose devices adapted to communicate with the robot controller. The communication with the robot controller can be wireless or via a wire. The number of client devices may vary and is not limited. The client devices can, for example, be smart phones, tablets, personal digital assistants (PDA), lap top computers, personal computers (PC), panel computers, interactive glasses, or the like. The enabling unit 7 and the client devices are separate devices, each comprised in a respective individual housing. In the embodiment example shown in figure 1, one client device is a smart phone 8 located in the robot cell 4 and another client device is a laptop computer 6 located outside the robot cell.

The client devices are provided with additional software to make it possible to jog the manipulator with the client devices. Each client device is provided with one or more software modules adapted to configure the existing user interface of the device to enable a user to input jog instructions to the device, and to generate and send jog commands to the robot controller in response to user interactions with the user interface. The software modules are running on the general purpose devices.

Each of the client devices includes a user interface, such as a touch screen, a display device, a keyboard, mouse etc., which makes it possible for a user to communicate with the robot controller. The user interfaces of the client devices are adapted to allow jogging of the manipulator. To achieve the adaption, the client devices are provided with software that configures the user interfaces to allow jogging of the manipulator by means of the user interface. The design of the software depends on which type of user interface of client device. Thereby, the existing user interfaces on the client devices can be used for jogging the manipulator. For example, the touch screen of the smart phone 8 and the display screen, key board, and mouse of the laptop computer 6 can be used for jogging the manipulator.

In order to be allowed to jog the manipulator, the client device must ask for permission to jog the manipulator from the robot controller. Therefore, each of the client devices is provided with software configured to send a request to the robot controller for authorization to take over control the robot during manual mode, such as to jog the manipulator and modify the robot control program by means of the client device, and to handle the communication with the robot controller regarding the request. The robot controller 2 is configured to receive requests for authorization from the client devices, to grant or deny the requests for authorization, to receive the jog commands from the client devices, and to control the movements of the manipulator 1 during manual mode based on the received jog commands provided that the general purpose device sending the jog commands has been authorized control of the robot during manual mode.

The client device is capable of communicating with the robot controller 2 over a factory network or another direct network, such as GPRS. For example, a service engineer is provided with a computer located at a remote site and capable of communicating with the robot controllers via a network. The operator in the robot cell holds the smart phone 8 in his left hand and the enabling unit 7 in his right hand. The invention makes it possible for the service engineer to remotely jog the manipulator from the personal computer 6, while the operator located in the robot cell activates the enabling device 9.

Although the enabling unit and the client devices are physically separated devices, they can be detachably connected to each other. If the client device is portable, such as a smart phone or a tablet computer, and is to be used in the robot cell by a single operator, as shown in figure 1, it is an advantage that the client device and the enabling unit can be attached to each other to enable handling of the two devices as a single unit. In one embodiment of the invention, the robot system may comprise fastening means for removably attaching the client device to the enabling unit, for example, by Velcro closing. In another embodiment of the invention, the enabling unit is designed as a holder or docking-station for the client device, to facilitate using of the client device together with the enabling unit. The tablet holder or docking station can be ergonomically designed so that the enabling device can be held at the same time as the combined enabling unit and client device is held in one or both hands. The hand or fingers that are free are then used to operate the user interface of the client device, such as, the tablet or smart phone. The holder portion of the enabling unit may also include some active elements, such as power, provided by batteries or a cable, and other communications means for network and video communications, such as wired and wireless Ethernet, HDMA, VGA.

Figure 3 shows another example of an enabling unit 10 designed as a holder for a client device in the form of a smart phone 8. The enabling unit 10 includes an enabling device 12, in the form of a dead man switch, and an emergency stop button 13. The enabling unit 10 further comprises a confirmation member 14 in the form of a switch or button. The smart phone 8 includes a touch screen 16 which displays a user interface configured for jogging the manipulator. The operator jogs the robot by interacting with the user interface displayed on the screen 16. The smart phone is further provided with a wake up button 17.

In case one or more of the client devices is remotely located, or at least located outside the robot cell, it is advantageous that the system comprises a confirmation member 14 located in the vicinity of the manipulator, i.e. inside the robot cell, and physically separated from the client devices, i.e. not permanently attached or connected to the client devices. The purpose of the confirmation member 14 is to enhance the safety in the robot cell in that an operator inside the robot cell must confirm his approval before the robot controller 2 may grant a request for authorization from any of the client devices. The confirmation member 14 comprises, for example, a switch or a button, and is configured to generate an ok-signal upon activation. Suitably, the confirmation member 14 is located on the enabling unit, as shown in figure 3 and 4. Alternatively, the enabling device 9 can be used as the confirmation member 14. For example, the ok-signal is generated when the operator carries out a sequence of actions on the enabling device, such as a double click on the enabling device. However, it is also possible to locate the confirmation member 14 on the robot controller 2, or at any other suitable place inside the robot cell.

The ok-signal is transmitted to the robot controller. The robot controller 2 is configured to receive the ok-signal when the confirmation member is activated, and the robot controller is configured to deny a request for authorization if the ok-signal is not received within a certain time limit from the point in time the request for authorization was received. The robot controller 2 is allowed to grant the request for authorization provided that the ok-signal is received within a certain time limit from the point in time the request for authorization was received.

Figure 4 shows block diagrams of an industrial robot system according to an embodiment of the invention. The system comprises a manipulator 1, a robot controller 2, an enabling unit 30, and a plurality of user operable client devices 20, 22 in the form of general purpose devices. The client devices 20, 22 are wirelessly connected to the control unit 2.

Each of the client devices includes a user interface 24, for example a touch screen, and a jog command module 26 configured to adapt the user interface 24 to allow a user to instruct jogging of the manipulator, for example to display a interface for jogging the manipulator on the touch screen, and to generate and send jog commands to the robot controller 2 in response to user interactions with the user interface, and an authorization handler 28 configured to send a request to the robot controller 2 for authorization to take over control the robot during manual mode. Alternatively, each client device include two software module, one software module for adapting the user interface to allow jogging and another software module for generating and sending the jog commands.

The authorization handler 28 is also configured to send credentials of the user, such as user name and password, to the robot controller. The jog command module 26 is further configured to receive a reply from the robot controller and to inform a user of the client device whether the request was granted or denied upon receiving the reply. The jog command module 26 and the authorization handler 28 are software modules uploaded to the client devices 20, 22, for example, software applications (Apps) which can be down loaded from the Internet or from the robot controller itself, or any other source. These can be in many forms, including, but not limited to, .NET, Java, HTML5, Javascript, Flash, or native applications for the general purpose device. The software modules are run on the general purpose devices.

As an example, if the general purpose device includes a standard web browser, the web browser may retrieve the necessary software modules, for example, from the robot controller using a normal HTTP GET request. From this point the software modules may run inside the web browser or outside the web browser depending upon the modules and settings of general purpose device.

The enabling unit 30 is connected to the robot controller 2 via a cable 31, and provided with an enabling device 9 that has to be activated to enable jogging of the robot and a confirmation member 14. The enabling unit 30 comprises a confirmation module 32 configured to generate an ok-signal upon activation of the confirmation member 14. The enabling unit 30 also comprises a communication unit 33 configured to transfer information regarding the state of the enabling device and the ok-signal to the robot controller 2.

The robot controller 2 includes hardware, such as a processing unit, for example a CPU, memory and data storage, for running software module and to communicate with external units. The robot controller 2 comprises a communication unit 36 for providing communication with the client devices 20, 22 and the enabling unit 30, and a session handler 38. The session handler 38 allows each client device to "negotiate" the rights to resources and grants necessary to perform the functions that were previously associated with the permanently attached teach pendant, such as to take over the control of the robot motions during manual mode. The session handler 38 is configured to receive the requests for authorization to take over control of the robot from the client devices 20, 22, and to grant or deny the requests for authorization. The session handler 38 is also configured to checks whether any other client device has been granted control over the robot, and to grant or deny the requests for authorization based thereon. In some cases, two client devices can be allowed simultaneous control of the robot during manual mode. However, in most cases only one client device at a time is allowed manual control of the manipulator. The session handler 38 is configured to receive the ok-signal when the confirmation member is activated, and to deny the request for authorization if the ok-signal is not received within a certain time limit from the point in time the request for authorization was received. The session handler 38 is configured to send a reply to the client device, which has requested authorization, to inform whether the request was granted or denied. The session handler continuously receives information about the state of the enabling device.

The robot controller 2 also comprises a user authorization module 40 configured to check credentials received from the client devices. The authentication module 40 is configured to provide authentication check of the credentials, i.e. to validate the credentials in order to confirm that the person sending the request to the controller is the correct person and if they are authorized. The session handler 38 is configured to deny the request if the authentication check of the credentials was not successful and to grant the request provided that the check was successful.

The robot controller further comprises an enable module 42 configured to receive information regarding the state of the enabling device 9 from the enabling unit 30, and to enable or disable jogging of the manipulator 1 based on the state of the enabling device. The enabling unit is part of the safety system of the robot. The enabling unit is preferably implemented by hardware.

The robot controller further comprises a jogging module 44 configured to receive jog commands from the client devices, and to control the movements of the manipulator during manual mode based on the received jog commands if the client device has been authorized control of the robot and the enabling module 42 has enabled jogging of the manipulator. The session handler 38, the jogging module 44 and the authentication module 40 are preferably implemented as software modules.

The robot controller comprises a timer 46, and the session handler 38 is configured to start the timer upon receiving a request for authorization to take over control of the robot from any of the client devices, to wait to receive information on whether a check of credentials sent from the general purpose device was successful or not, to stop the timer and deny the request if the check of the credentials was not successful, to wait to receive an ok-signal from said confirmation member. If an ok-signal is received within a certain time limit counted from the start of the timer, the request is granted, otherwise the timer is stopped and the request is denied. Alternatively, the session handler 38 is configured to check whether any of the other client devices has already been granted control over the robot, and to stop the timer and deny the request if another general purpose device has already been granted control over the robot, unless both client devices are allowed to simultaneously control the robot during manual mode.

In an embodiment of the invention, the software running on the client devices is constructed to allow a user to also modify the robot control program, I/O signals, and configuration parameters of the robot controller, and the robot controller is configured to authorize the client devices to jog the manipulator as well as to monitoring, to start and stop, and to edit the robot program the robot control program via the adapted user interfaces of the general purpose devices. Thus, the client devices can be used for monitoring the robot program, changing certain variables in the program, starting, stopping, and editing the robot program and setting I/O and configuration parameters. In such a case, it can be advantageous to simultaneously allow more than one client device control of the robot during manual mode. For example, the operator may use a PC for modifying the control program and a smart phone for jogging the manipulator. In this embodiment, there is no permanently attached teach pendant, any of the connected (wired or wireless) client devices (Panels, PC's, tablets, phones) may take on the role of jogging and modifying the robot program, I/O, or configuration.

The session handler 38 handles the requests received from the client devices. In the following an example is described of a method for handling the requests, carried out by the session handler. When a client device sends a request to take over the control of the robot, the session handler receives the request. The session handler checks that the controller is in manual mode. If the controller is in manual mode the session handler starts a timer upon receiving the request. The session handler checks that no other client device has been granted control over the robot, or simultaneous control is allowed for the client devices. If another client device has already been granted control over the robot and simultaneous control is not allowed, the request is denied and the timer is stopped, otherwise the session handler waits for the client device to send credentials of the user of the client device. When the credentials are received, the credentials are checked by the user authorization module 40. The session handler receives the result of the user authorization check, and if the authorization was successful, the session handler waits for an ok-signal from the confirmation member 14, otherwise the request is denied and the timer is stopped. If an ok-signal is received within a certain time limit, for example 10s, counted from the start of the timer, the request is accepted and the client device is informed accordingly. If no ok-signal is received within the time limit, the request is denied. As soon as the enabling device is deactivated, the granted authorization to control the robot is ceased, and the client device in charge is informed accordingly.

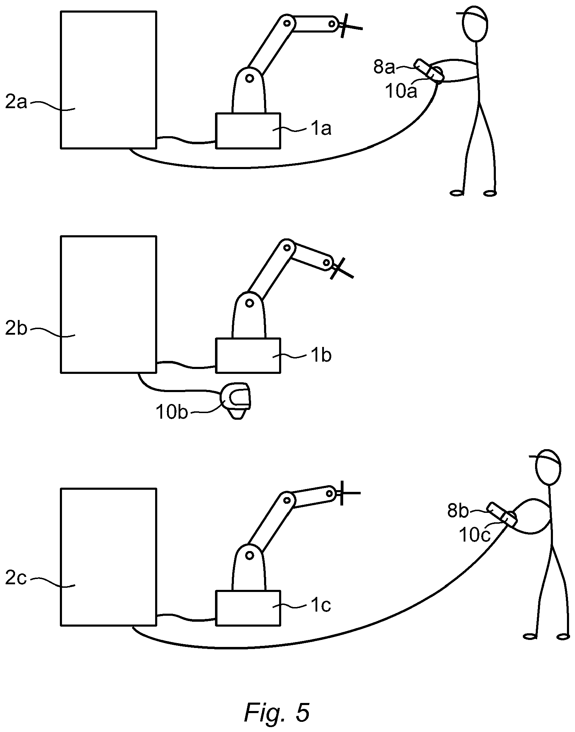

Figure 5 shows an example of an industrial robot system according to the invention and including three robots, each robot including a manipulator and a robot controller. The robot system comprises three manipulators 1a-c, and three robot controllers 2a-c, each controlling the movements of one of the manipulators. Each robot controller is connected to an enabling unit 10a-c for enabling manual control of the manipulator connected to the controller. Each robot controller is provided with a session handler. The system further comprises a plurality of client devices, in the form of smart phones 8a-b, provided with additional software for jogging the manipulator and to send a request to the robot controller for authorization to take over control the robot during manual mode. An operator can use his own smart phone to jog any of the manipulators. If the operator intends to jog another robot in the system, he only has to use the enabling unit of the other robot and send a request to take over control of the robot to the robot controller connected to the enabling unit.

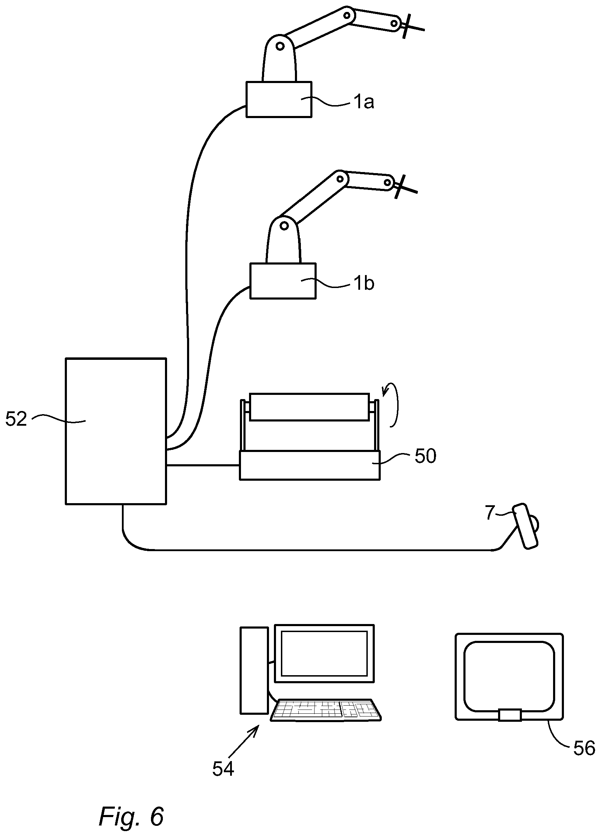

Figure 6 shows another example of an industrial robot system according to the invention. The robot system includes two manipulators 1a-b, a positioner 50 movable about on axis, a robot controller 52 configured to control the movements of the manipulators 1a-b as well as the positioner 50. The robot controller 52 is provided with a session handler. The robot system further includes an enabling unit 7, and two client devices, in the form of a stationary PC 54, and a tablet computer 56, in communication with the robot controller 52. In this example a single enabling unit is used for all manipulators and axes connected to the single robot controller. The client devices are provided with additional software to make it possible to jog the manipulator with the client devices, to modify the robot control program and input and output to the robot by means of the client devices, and to send a request to the robot controller for authorization to take over control of the robot during manual mode. This embodiment enables an operator to control the operation of a plurality of manipulators and axes in the same robot cell.

In another embodiment of the invention, the enabling unit can be a TPU working together with multiple general purpose devices. Additionally, the TPU can be modified to include an authorization handler allowing it to request authorization to jog the manipulator together with the general purpose devices.

The present invention is not limited to the embodiments disclosed but may be varied and modified within the scope of the following claims. There is no limit to the number of client devices in the robot system. Two or more user operable client devices may be used.

## Claims

1. An industrial robot system comprising:
- a manipulator (1; 1a-c) movable about a plurality of axes,
- a robot controller (2; 2a-c; 52) configured to control the movements of the manipulator based on jog commands received during a manual mode,
- an enabling unit (7; 10; 10a-c; 30) including an enabling device (9) that has to be activated to enable jogging of the robot, and the enabling unit is configured to transfer information regarding the state of the enabling device to the robot controller, and the robot controller is configured to control the movements of the manipulator during manual mode in dependence on the state of the enabling device,
- at least two general purpose devices (6, 8, 8a-b, 20, 22, 54, 56) configured to communicate with the robot controller, wherein the enabling unit and the general purpose devices are separate devices, each comprised in a respective individual housing, and each of the general purpose devices includes a user interface (16;24) adapted to allow jogging of the manipulator, and a jog command module (28) configured to send jog commands to the robot controller in response to user interactions with the user interface, and the robot controller is configured to control the movements of the manipulator during manual mode based on the received jog commands provided that the general purpose device sending the jog commands has been authorized control of the robot during manual mode, and each of the general purpose devices comprises an authorization handler (26) configured to send a request to the robot controller for authorization to take over control of the robot during manual mode, **characterised in that** the enabling unit (10; 13) comprises a confirmation module (32) configured to generate a confirm of approval signal upon activation of a confirmation member(14;9) provided on the enabling unit, and the robot controller is configured to receive said requests for authorization from the general purpose devices and said confirm of approval signal from the enabling unit, the robot controller is configured to deny the request for authorization if the confirmation signal is not received within a certain time limit from the point in time the request for authorization was received, and the robot controller is allowed to grant the request for authorization provided that the signal is received within said time limit.

2. The robot system according to claim 1, wherein the enabling unit (7; 10; 10a-c; 30) lacks the ability to jog the manipulator (1) and the general purpose devices (6, 8, 8a-b, 20, 22, 54, 56) do not have any enabling devices that has to be activated to enable jogging of the manipulator.

3. The robot system according to claim 1 or 2, wherein the general purpose devices (6, 8, 8a-b, 20, 22, 54, 56) are any of a smart phone, a tablet computer, a personal digital assistant, a lap top computer, a personal computer, a panel computer, a gesture recognition device, or interactive glasses.

4. The robot system according to any of the previous claims, wherein the user interface (16; 24) of each of the general purpose devices is adapted to allow a user to modify the robot control program, and the robot controller (2; 2a-c) is configured to authorize the general purpose devices to jog the manipulator as well as to modify the robot control program via the user interfaces of the general purpose devices.

5. The robot system according to any of the previous claims, wherein said authorization handler (26) is configured to send credentials of the user to the robot controller (2) and the robot controller (2) comprises a user authorization module (40) configured to check credentials received from the general purpose devices, and the robot controller is configured to deny the request if the check of the credentials was not successful.

6. The robot system according to any of the previous claims, wherein the robot controller (2) comprises a timer (46) and the robot controller is configured to:
- start the timer upon receiving a request for authorization to take over control of the robot from any of the general purpose devices (6, 8, 8a-b, 20, 22, 54, 56),
- wait to receive information on whether a check of credentials sent from the general purpose device was successful or not,
- stop the timer and deny the request if the check of the credentials was not successful,
- wait to receive an confirm of approval signal from said confirmation member (14),
- grant the request if a confirm of approval signal is received within a certain time limit counted from the start of the timer,
- stop the timer and deny the request if no confirm of approval signal is received within the certain time limit, and
- send a reply to the general purpose device to inform whether the request was granted or denied.

7. The robot system according to any of the previous claims, wherein the robot controller (2;2a-c) is configured to receive information about the state of the enabling device (9), and to cease the granted authorization upon receiving information that the enabling device is deactivated.

8. The robot system according to any of the previous claims, wherein the enabling unit (7; 10a-b; 30) is connected to the robot controller (2) via a wire (31), and the general purpose devices (8; 8a-b) are in wireless communication with the robot controller.

9. The robot system according to any of the previous claims, wherein the system comprises at least two manipulators (1a-c) and at least two robot controllers (2a-c) controlling the movements of the manipulators, and each manipulator is provided with an enabling unit (10a-c) connected to the robot controller controlling the movements of the manipulator.

10. The robot system according to any of the previous claims, wherein the enabling unit (10) is designed to removably attach one of the general purpose devices to the enabling unit to enable handling of the two devices as a single unit.

11. The robot system according to any of the previous claims, wherein the confirmation member is the enabling device.

12. A method for controlling an industrial robot system comprising a manipulator (1;1a-c) movable about a plurality of axes, a robot controller (2;2a-c) configured to control the movements of the manipulator based on jog commands during a manual mode, an enabling unit (7; 10; 10a-c; 3) including an enabling device (9) that has to be activated to enable jogging of the robot, and at least two general purpose devices (6, 8, 8a-b, 20, 22, 54, 56), each including a user interface (16;24) adapted for jogging the manipulator, wherein the method comprises:
- receiving a request for authorization to take over control the robot during manual mode from one of the general purpose devices,
- checking that no other general purpose device has been granted control over the robot and based thereon grant or deny the request for authorization,
**characterised by**
- receiving a confirm of approval signal from the enabling unit when a confirmation member provided on the enabling unit is activated,
- denying the request for authorization if the confirm of approval signal is not received within a certain time limit from the point in time the request for authorization was received,
- granting the request for authorization provided that the signal is received within said time limit,
- informing a user of the general purpose device requesting authorization whether control of the robot was granted or not,
- receiving information regarding the state of the enabling device from the enabling unit,
- receiving jog commands from one of the general purpose devices, and
- allowing movements the manipulator based on the received jog commands in dependence on the state of the enabling device provided that the general purpose device sending the jog commands is authorized control of the robot.

13. The method according to claim 12, wherein said authorization to control the robot comprises authorization for jogging the manipulator as well as for modifying the robot control program via the user interface of the general purpose device.

14. The method according to claim 12 or 13 wherein the method comprises:
- starting a timer upon receiving a request for authorization to take over control of the robot,
- stopping the timer and denying the request if another general purpose device has already been granted control over the robot, otherwise
- receiving user credentials from the general purpose devices that sent the request,
- performing a check of the credentials in order to determine whether the user is allowed to control the robot,
- stopping the timer and denying the request if the check of the credentials was not successful, otherwise
- waiting to receive a confirm of approval signal, and
- granting the request for authorization if the confirm of approval signal is received within a certain time limit counted from the start of the timer,
- stopping the timer and denying the request if the confirm of approval signal is not received within the certain time limit, and
- sending a reply to inform the general purpose devices whether the request was granted or denied.

15. The method according to any of the claims 12 - 14, wherein the granted authorization is ceased upon receiving information that the enabling device is deactivate.

## Patentansprüche

1. Industrielles Robotersystem, das Folgendes umfasst:
- einen Manipulator (1; 1a-c), der um mehrere Achsen beweglich ist,
- eine Robotersteuereinheit (2; 2a-c; 52), die konfiguriert ist, die Bewegungen des Manipulators anhand von Vorrückbefehlen, die während einer manuellen Betriebsart empfangen werden, zu steuern,
- eine Aktivierungseinheit (7; 10; 10a-c; 30), die eine Aktivierungsvorrichtung (9) enthält, die aktiviert werden muss, um ein Vorrücken des Roboters zu ermöglichen, wobei die Aktivierungseinheit konfiguriert ist, Informationen bezüglich des Zustands der Aktvierungsvorrichtung an die Robotersteuereinheit zu übertragen, und die Robotersteuereinheit konfiguriert ist, die Bewegungen des Manipulators während der manuellen Betriebsart abhängig von dem Zustand der Aktivierungsvorrichtung zu steuern,
- mindestens zwei Universalvorrichtungen (6, 8, 8a-b, 20, 22, 54, 56), die konfiguriert sind, mit der Robotersteuereinheit zu kommunizieren, wobei die Aktvierungseinheit und die Universalvorrichtungen getrennte Vorrichtungen sind, die jeweils in einem jeweiligen individuellen Gehäuse enthalten sind, und jede der Universalvorrichtungen eine Anwenderschnittstelle (16; 24), die ausgelegt ist, ein Vorrücken des Manipulators zu erlauben, und ein Vorrückbefehlsmodul (28), das konfiguriert ist, Vorrückbefehle als Reaktion auf eine Anwenderwechselwirkung mit der Anwenderschnittstelle an die Robotersteuereinheit zu senden, enthält und die Robotersteuereinheit konfiguriert ist, die Bewegungen des Manipulators während einer manuellen Betriebsart anhand der empfangenen Vorrückbefehle zu steuern, vorausgesetzt, dass die Universalvorrichtung, die die Vorrückbefehle sendet, autorisiert wurde, den Roboter während der manuellen Betriebsart zu steuern, und
jede der Universalvorrichtungen ein Autorisierungssteuerungsprogramm (26) umfasst, das konfiguriert ist, eine Anforderung einer Autorisierung, die Steuerung des Roboters während der manuellen Betriebsart zu überwachen, an die Robotersteuereinheit zu senden, **dadurch gekennzeichnet, dass**
die Aktivierungseinheit (10; 13) ein Bestätigungsmodul (32) umfasst, das konfiguriert ist, bei Aktivierung eines Bestätigungselements (14; 9), das auf der Aktivierungseinheit vorgesehen ist, ein Genehmigungsbestätigungssignal zu erzeugen, und die Robotersteuereinheit konfiguriert ist, die Anforderungen einer Autorisierung von den Universalvorrichtungen und das Genehmigungsbestätigungssignal von der Aktivierungseinheit zu empfangen, wobei die Robotersteuereinheit konfiguriert ist, die Anforderung einer Autorisierung zu verweigern, wenn das Bestätigungssignal nicht innerhalb einer bestimmten Zeitgrenze von dem Zeitpunkt, zu dem die Anforderung der Autorisierung empfangen wurde, empfangen wird, und der Robotersteuereinheit erlaubt ist, die Anforderung einer Autorisierung zu genehmigen vorausgesetzt, dass das Signal innerhalb der Zeitgrenze empfangen wird.

2. Robotersystem nach Anspruch 1, wobei der Aktivierungseinheit (7; 10; 10a-c; 30) die Fähigkeit fehlt, den Manipulator (1) vorzurücken, und die Universalvorrichtungen (6, 8, 8a-b, 20, 22, 54, 56) keine Aktivierungsvorrichtungen besitzen, die aktiviert werden müssen, um das Vorrücken des Manipulators zu ermöglichen.

3. Robotersystem nach Anspruch 1 oder 2, wobei die Universalvorrichtungen (6, 8, 8a-b, 20, 22, 54, 56) aus den Folgenden ausgewählt sind: Smartphone, Tablet-Computer, persönlicher digitaler Assistent, Laptop-Computer, Personalcomputer, Tafelcomputer, Gestenerkennungsvorrichtung oder interaktiver Brille.

4. Robotersystem nach einem der vorhergehenden Ansprüche, wobei die Anwenderschnittstelle (16; 24) jeder der Universalvorrichtungen ausgelegt ist, einem Anwender zu erlauben, das Robotersteuerprogramm zu ändern, und die Robotersteuereinheit (2; 2a-c) konfiguriert ist, die Universalvorrichtung zu autorisieren, den Manipulator vorzurücken als auch das Robotersteuerprogramm über die Anwenderschnittstellen der Universalvorrichtungen zu ändern.

5. Robotersystem nach einem der vorhergehenden Ansprüche, wobei das Autorisierungssteuerungsprogramm (26) konfiguriert ist, Berechtigungsnachweise des Anwenders an die Robotersteuereinheit (2) zu senden, und eine Robotersteuereinheit (2) ein Anwenderautorisierungsmodul (40) umfasst, das konfiguriert ist, Berechtigungsnachweise zu überprüfen, die von den Universalvorrichtungen empfangen wurden, und die Robotersteuereinheit konfiguriert ist, die Anforderung zu verweigern, wenn die Überprüfung der Berechtigungsnachweise nicht erfolgreich war.

6. Robotersystem nach einem der vorhergehenden Ansprüche, wobei die Robotersteuereinheit (2) einen Zeitgeber (46) umfasst und die Robotersteuereinheit konfiguriert ist:
- den Zeitgeber bei Empfangen einer Anforderung einer Autorisierung, die Steuerung des Roboters zu übernehmen, von einer der Universalvorrichtungen (6, 8, 8a-b, 20, 22, 54, 56) zu starten,
- zu warten, Informationen darüber zu empfangen, ob eine Überprüfung der von der Universalvorrichtung gesendeten Berechtigungsnachweise erfolgreich war oder nicht,
- den Zeitgeber anzuhalten und die Anforderung zu verweigern, wenn die Überprüfung der Berechtigungsnachweise nicht erfolgreich war,
- zu warten, ein Genehmigungsbestätigungssignals von dem Bestätigungselement (14) zu empfangen,
- die Anforderung zu gewähren, wenn ein Genehmigungsbestätigungssignal innerhalb einer bestimmten Zeitgrenze, die von dem Start des Zeitgebers gemessen wird, empfangen wird,
- den Zeitgeber anzuhalten und die Anforderung zu verweigern, wenn kein Genehmigungsbestätigungssignal innerhalb der bestimmten Zeitgrenze empfangen wird, und
- eine Antwort an die Universalvorrichtung zu senden, um darüber zu informieren, ob die Anforderung gewährt oder verweigert wurde.

7. Robotersystem nach einem der vorhergehenden Ansprüche, wobei die Robotersteuereinheit (2; 2a-c) konfiguriert ist, Informationen über den Zustand der Aktivierungsvorrichtung (9) zu empfangen und die gewährte Autorisierung bei Empfang von Informationen darüber, dass die Aktivierungsvorrichtung deaktiviert wurde, zu beenden.

8. Robotersystem nach einem der vorhergehenden Ansprüche, wobei die Aktivierungseinheit (7; 10a-b; 30) mit der Robotersteuereinheit (2) über einen Draht (31) verbunden ist und die Universalvorrichtungen (8; 8a-b) in einer drahtlosen Kommunikation mit der Robotersteuereinheit sind.

9. Robotersystem nach einem der vorhergehenden Ansprüche, wobei das System mindestens zwei Manipulatoren (1a-c) und mindestens zwei Robotersteuereinheiten (2a-c), die die Bewegungen der Manipulatoren steuern, umfasst und jeder Manipulator mit einer Aktivierungseinheit (10a-c) ausgestattet ist, die mit der Robotersteuereinheit verbunden ist, die die Bewegungen des Manipulators steuert.

10. Robotersystem nach einem der vorhergehenden Ansprüche, wobei die Aktivierungseinheit (10) so gestaltet ist, dass sie eine der Universalvorrichtungen abnehmbar an der Aktivierungseinheit befestigt, um ein Handhaben der beiden Vorrichtungen als eine einzige Einheit zu ermöglichen.

11. Robotersystem nach einem der vorhergehenden Ansprüche, wobei das Bestätigungselement die Aktivierungsvorrichtung ist.

12. Verfahren zum Steuern eines industriellen Robotersystems, das einen Manipulator (1; 1a-c), der um mehrere Achsen beweglich ist, eine Robotersteuereinheit (2; 2a-c), die konfiguriert ist, die Bewegungen des Manipulators anhand von Vorrückbefehlen während einer manuellen Betriebsart zu steuern, eine Aktivierungseinheit (7; 10; 10a-c; 3), die eine Aktivierungsvorrichtung (9) enthält, die aktiviert werden muss, um das Vorrücken des Roboters zu ermöglichen, und mindestens zwei Universalvorrichtungen (6, 8, 8a-b, 20, 22, 54, 56), die jeweils eine Anwenderschnittstelle (16; 234) enthalten, die für ein Vorrücken des Manipulators ausgelegt ist, umfasst, wobei das Verfahren Folgendes umfasst:
- Empfangen einer Anforderung einer Autorisierung, die Steuerung des Roboters während einer manuellen Betriebsart zu übernehmen, von einer der Universalvorrichtungen,
- Überprüfen, dass keiner anderen Universalvorrichtung eine Steuerung über den Roboter gewährt wurde, und anhand dessen Gewähren oder Verweigern der Anforderung einer Autorisierung, **gekennzeichnet durch**
- Empfangen eines Genehmigungsbestätigungssignals von der Aktivierungseinheit, wenn ein Bestätigungselement, das auf der Aktivierungseinheit vorgesehen ist, aktiviert wird,
- Verweigern der Anforderung einer Autorisierung, wenn das Genehmigungsbestätigungssignal nicht innerhalb einer bestimmten Zeitgrenze von dem Zeitpunkt, zu dem die Anforderung einer Autorisierung empfangen wurde, empfangen wird,
- Gewähren der Anforderung einer Autorisierung vorausgesetzt, dass das Signal innerhalb der Zeitgrenze empfangen wird,
- Informieren eines Anwenders der Universalvorrichtung, die eine Autorisierung anfordert, darüber, ob die Steuerung des Roboters gewährt wurde oder nicht,
- Empfangen von Informationen bezüglich des Zustands der Aktivierungsvorrichtung von der Aktivierungseinheit,
- Empfangen von Vorrückbefehlen von einer der Universalvorrichtungen und
- Erlauben von Bewegungen des Manipulators anhand der empfangen Vorrückbefehle abhängig von dem Zustand der Aktivierungsvorrichtung vorausgesetzt, dass die Universalvorrichtung, die die Vorrückbefehle sendet, autorisiert ist, den Roboter zu steuern.

13. Verfahren nach Anspruch 12, wobei die Autorisierung, den Roboter zu steuern, eine Autorisierung sowohl zum Vorrücken des Manipulators als auch zum Ändern des Robotersteuerprogramms über die Anwenderschnittstelle der Universalvorrichtung umfasst.

14. Verfahren nach Anspruch 12 oder 13, wobei das Verfahren Folgendes umfasst:
- Starten des Zeitgebers beim Empfangen einer Anforderung einer Autorisierung, die Steuerung des Roboters zu übernehmen,
- Anhalten des Zeitgebers und Verweigern der Anforderung, wenn einer anderen Universalvorrichtung bereits die Steuerung über den Roboter gewährt wurde, anderenfalls
- Empfangen von Anwenderberechtigungsnachweisen von den Universalvorrichtungen, die die Anforderung gesendet haben,
- Ausführen einer Überprüfung der Berechtigungsnachweise, um zu bestimmen, ob dem Anwender erlaubt ist, den Roboter zu steuern,
- Anhalten des Zeitgebers und Verweigern der Anforderung, wenn die Überprüfung der Berechtigungsnachweise nicht erfolgreich war, anderenfalls
- Warten, ein Genehmigungsbestätigungssignal zu empfangen, und
- Gewähren der Anforderung einer Autorisierung, wenn das Genehmigungsbestätigungssignal innerhalb einer bestimmten Zeitgrenze, die von dem Start des Zeitgebers gemessen wird, empfangen wird,
- Anhalten des Zeitgebers und Verweigern der Anforderung, wenn das Genehmigungsbestätigungssignal nicht innerhalb der bestimmten Zeitgrenze empfangen wird, und
- Senden einer Antwort, um die Universalvorrichtungen darüber zu informieren, ob die Anforderung gewährt oder verweigert wurde.

15. Verfahren nach einem der Ansprüche 12-14, wobei die gewährte Autorisierung bei Empfangen von Informationen, dass die Aktivierungsvorrichtung deaktiviert ist, beendet wird.

## Revendications

1. Système robotique industriel comprenant :
- un manipulateur (1 ; 1a-c) pouvant être bougé autour d'une pluralité d'axes,
- un organe de contrôle de robot (2 ; 2a-c ; 52) configuré de façon à contrôler les mouvements du manipulateur en se basant sur des commandes de déplacement par à-coups reçues pendant un mode manuel,
- une unité de permission (7 ; 10 ; 10a-c ; 30) comprenant un dispositif de permission (9) qui doit être activé pour permettre le déplacement par à-coups du robot, et cette unité de permission étant configurée de façon à transférer des informations concernant l'état du dispositif de permission à l'organe de contrôle du robot, et l'organe de contrôle du robot étant configuré de façon à contrôler les mouvements du manipulateur pendant le mode manuel selon l'état du dispositif de permission,
- au moins deux dispositifs à usage général (6, 8, 8a-b, 20, 22, 54, 56) configurés de façon à communiquer avec l'organe de contrôle du robot, l'unité de permission et les dispositifs à usage général étant des dispositifs séparés, chacun étant logé dans un boîtier individuel respectif, et chacun des dispositifs à usage général comprenant une interface utilisateur (16 ; 24) adaptée de façon à permettre le déplacement par à-coups du manipulateur, et un module de commande de déplacement par à-coups (28) configuré de façon à envoyer des commandes de déplacement par à-coups à l'organe de contrôle du robot en réponse à des interactions de l'utilisateur avec l'interface utilisateur, et l'organe de contrôle du robot étant configuré de façon à contrôler les mouvements du manipulateur pendant le mode manuel en se basant sur les commandes de déplacement par à-coups reçues à condition que le dispositif à usage général envoyant les commandes de déplacement par à-coups ait été autorisé à contrôler le robot pendant le mode manuel, et chacun des dispositifs à usage général comprenant un gestionnaire d'autorisation (26) configuré de façon à envoyer une demande à l'organe de contrôle du robot pour obtenir l'autorisation de prendre le contrôle du robot pendant le mode manuel,
**caractérisé en ce que**
l'unité de permission (10 ; 13) comprend un module de confirmation (32) configuré de façon à générer une confirmation du signal d'approbation lors de l'activation d'un élément de confirmation (14 ; 9) prévu sur l'unité de permission, et l'organe de contrôle du robot est configuré de façon à recevoir lesdites demandes d'autorisation provenant des dispositifs à usage général et ladite confirmation du signal d'approbation provenant de l'unité de permission, l'organe de contrôle du robot est configuré de façon à refuser la demande d'autorisation si le signal de confirmation n'est pas reçu dans les limites d'une certaine période de temps à partir du moment où la demande d'autorisation a été reçue, et l'organe de contrôle du robot est autorisé à accepter la demande d'autorisation à condition que le signal soit reçu dans les limites de ladite période de temps.

2. Système robotique selon la revendication 1, dans lequel l'unité de permission (7 ; 10 ; 10a-c ; 30) n'a pas la capacité de déplacer par à-coups le manipulateur (1) et les dispositifs à usage général (6, 8, 8a-b, 20, 22, 54, 56) n'ont pas de dispositifs de permission qui doivent être activés pour permettre le déplacement par à-coups du manipulateur.

3. Système robotique selon la revendication 1 ou 2, dans lequel les dispositifs à usage général (6, 8, 8a-b, 20, 22, 54, 56) sont n'importe quels dispositifs parmi le groupe comprenant un téléphone intelligent, une tablette électronique, un assistant numérique personnel, un ordinateur portatif, un ordinateur personnel, un ordinateur panneau, un dispositif de reconnaissance gestuelle, ou des lunettes interactives.

4. Système robotique selon l'une quelconque des revendications précédentes, dans lequel l'interface utilisateur (16 ; 24) de chacun des dispositifs à usage général est adaptée de façon à autoriser un utilisateur à modifier le programme de contrôle du robot, et l'organe de contrôle du robot (2 ; 2a-c) est configuré de façon à autoriser les dispositifs à usage général à déplacer par à-coups le manipulateur et aussi à modifier le programme de contrôle du robot via les interfaces utilisateur des dispositifs à usage général.

5. Système robotique selon l'une quelconque des revendications précédentes, dans lequel ledit gestionnaire d'autorisation (26) est configuré de façon à envoyer un justificatif d'identité de l'utilisateur à l'organe de contrôle du robot (2) et l'organe de contrôle du robot (2) comprend un module d'autorisation d'utilisateur (40) configuré de façon à vérifier le justificatif d'identité reçu des dispositifs à usage général, et l'organe de contrôle du robot (2) est configuré de façon à refuser la demande si la vérification du justificatif d'identité n'a pas été positive.

6. Système robotique selon l'une quelconque des revendications précédentes, dans lequel l'organe de contrôle du robot (2) comprend une minuterie (46) et l'organe de contrôle du robot est configuré de façon à :
- démarrer la minuterie lors de la réception d'une demande d'autorisation de prise de contrôle du robot provenant de n'importe lesquels des dispositifs à usage général (6, 8, 8a-b, 20, 22, 54, 56),
- attendre de recevoir une information sur si oui ou non une vérification du justificatif d'identité envoyée depuis le dispositif à usage général était positive,
- arrêter la minuterie et refuser la demande si la vérification du justificatif d'identité n'était pas positive,
- attendre de recevoir une confirmation de signal d'approbation provenant dudit élément de confirmation (14),
- accepter la demande si une confirmation du signal d'approbation est reçue dans les limites d'une certaine période de temps comptée à partir du démarrage de la minuterie,
- arrêter la minuterie et refuser la demande si aucune confirmation du signal d'approbation n'est reçue dans les limites de la certaine période de temps, et à
- envoyer une réponse au dispositif à usage général pour informer si la demande a été acceptée ou refusée.

7. Système robotique selon l'une quelconque des revendications précédentes, dans lequel l'organe de contrôle du robot (2 ; 2a-c) est configuré de façon à recevoir des informations sur l'état du dispositif de permission (9), et à mettre fin à l'autorisation accordée lorsqu'il reçoit une information que le dispositif de permission est désactivé.

8. Système robotique selon l'une quelconque des revendications précédentes, dans lequel l'unité de permission (7 ; 10a-b ; 30) est connectée à l'organe de contrôle du robot (2) via un fil (31), et les dispositifs à usage général (8 ; 8a-b) sont en communication sans fil avec l'organe de contrôle du robot.

9. Système robotique selon l'une quelconque des revendications précédentes, ce système comprenant au moins deux manipulateurs (1a-c) et au moins deux organes de commande du robot (2a-c) contrôlant les mouvements des manipulateurs, et chaque manipulateur étant pourvu d'une unité de permission (10a-c) connectée à l'organe de contrôle du robot contrôlant les mouvements du manipulateur.

10. Système robotique selon l'une quelconque des revendications précédentes, dans lequel l'unité de permission (10) est conçue de façon à attacher de manière amovible un des dispositifs à usage général à l'unité de permission pour permettre de traiter ces deux dispositifs comme une seule unité.

11. Système robotique selon l'une quelconque des revendications précédentes, dans lequel l'élément de confirmation est le dispositif de permission.

12. Procédé pour contrôler un système robotique industriel comprenant un manipulateur (1 ; 1a-c) pouvant être bougé autour d'une pluralité d'axes, un organe de contrôle du robot (2 ; 2a-c) configuré de façon à contrôler les mouvements du manipulateur en se basant sur des commandes de déplacement par à-coups pendant un mode manuel, une unité de permission (7 ; 10 ; 10a-c ; 3) comprenant un dispositif de permission (9) qui doit être activé pour permettre le déplacement par à-coups du robot, et au moins deux dispositifs à usage général (6, 8, 8a-b, 20, 22, 54, 56), comprenant chacun une interface utilisateur (16 ; 24) adaptée de façon à déplacer par à-coups le manipulateur, ce procédé comprenant :
- la réception d'une demande d'autorisation de prise de contrôle du robot pendant le mode manuel provenant d'un des dispositifs à usage général,
- la vérification qu'aucun autre dispositif à usage général n'a été autorisé à prendre le contrôle du robot et, en se basant sur cela, l'acceptation ou le refus de la demande d'autorisation,
**caractérisé par**
- la réception d'une confirmation d'un signal d'approbation provenant de l'unité de permission lorsqu'un élément de confirmation prévu sur l'unité de permission est activé,
- le refus de la demande d'autorisation si la confirmation du signal d'approbation n'est pas reçue dans les limites d'une certaine période de temps à partir du moment où la demande d'autorisation a été reçue,
- l'acceptation de la demande d'autorisation à condition que le signal soit reçu dans les limites de ladite période de temps,
- la notification à un utilisateur du dispositif à usage général demandant l'autorisation de si oui ou non le contrôle du robot a été autorisé ou pas,
- la réception d'une information concernant l'état du dispositif de permission provenant de l'unité de permission,- la réception de commandes de déplacement par à-coups provenant d'un des dispositifs à usage général, et
- l'autorisation de mouvements du manipulateur en se basant sur les commandes de déplacement par à-coups reçues selon l'état du dispositif de permission à condition que le dispositif à usage général envoyant les commandes de déplacement par à-coups soit autorisé à prendre le contrôle du robot.

13. Procédé selon la revendication 12, dans lequel ladite autorisation de prise de contrôle du robot comprend l'autorisation de déplacer par à-coups le manipulateur et aussi de modifier le programme de contrôle du robot via l'interface utilisateur du dispositif à usage général.

14. Procédé selon la revendication 12 ou 13, ce procédé comprenant :
- le démarrage d'une minuterie lors de la réception d'une demande d'autorisation de prise de contrôle du robot,
- l'arrêt de cette minuterie et le refus de la demande si un autre dispositif à usage général a déjà été autorisé à prendre le contrôle du robot, sinon
- la réception du justificatif d'identité de l'utilisateur provenant des dispositifs à usage général qui ont envoyé la demande,
- l'exécution d'une vérification du justificatif d'identité de façon à déterminer si oui ou non l'utilisateur est autorisé à contrôler le robot,
- l'arrêt de la minuterie et le refus de la demande si la vérification du justificatif d'identité n'a pas été positive, sinon
- l'attente de recevoir une confirmation du signal d'approbation, et
- l'acceptation de la demande d'autorisation si la confirmation du signal d'approbation est reçue dans les limites d'une certaine période de temps comptée à partir du démarrage de la minuterie,
- l'arrêt de la minuterie et le refus de la demande si la confirmation du signal d'approbation n'est pas reçue dans les limites de la certaine période de temps, et
- l'envoi d'une réponse pour informer le dispositif à usage général si la demande a été acceptée ou refusée.

15. Procédé selon l'une quelconque des revendications 12 à 14, dans lequel l'autorisation accordée est supprimée lors de la réception de l'information que le dispositif de permission est désactivé.
